# EUROPÄISCHE PATENTSCHRIFT

(11) **EP 0 374 498 B1**
(45) Veröffentlichungstag und Bekanntmachung des Hinweises auf die Patenterteilung: **29.09.1993**
(21) Anmeldenummer: 89121392.8
(22) Anmeldetag: 18.11.1989
(51) Int. Cl.: B30B 15/00, B29C 47/92, B28B 17/00, B30B 11/22

(54) **Spritz- oder Presswerkzeug**
Extrusion or press die
Matrice d'extrusion ou de pressage

(30) Priorität: 17.12.1988 DE 3842630
(43) Veröffentlichungstag der Anmeldung: 27.06.1990
(73) Patentinhaber: HÄNDLE GMBH & CO KG Maschinen und Anlagenbau, D-75417 Mühlacker (DE)
(72) Erfinder: Laenger, Fritz, Dipl.-Ing. (FH), D-7130 Mühlacker (DE)
(74) Vertreter: Jackisch, Walter

(56) Entgegenhaltungen:
- EP-A- 0 248 153
- DD-C- 213 294
- DE-C- 258 282
- DE-C- 910 037
- DATENBANK - WPI, Nr. 75-73362W [44], Derwent Publications Ltd, London, GB; & JP-B-50 030 678 (ASAHI) 02-10-1975

## Beschreibung

Die Erfindung betrifft ein Spritz- oder Preßwerkzeug mit einer Druckmeßeinrichtung der im Oberbegriff des Anspruches 1 angegebenen Gattung.

Bei der Herstellung von Keramik- oder Kunststoffprodukten, bei denen die Formgebung mittels Schnecken- oder Kolbenpressen, die die Preßmasse durch eine Düse pressen, erfolgt, ist die genaue Kenntnis des Preßdrucks außerordentlich wichtig. Der Preßdruck wird von mehreren Strömungswiderständen beeinflußt, beispielsweise durch Wand-Reibung, durch Verengungen oder Einbauten in der Druckkammer sowie durch das Mundstück bzw. die Düse. Bei bekannten Werkzeugen wird dieser Druck mittels Radialdruckmeßgeräten gemessen, wobei die dafür erforderliche Meßeinrichtung an der Zylinderwand eines die Preßkammer bildenden Hohlraumes angeordnet ist. Bekannt sind sowohl elektrische Einrichtungen, die eine Membran mit Dehnmeßstreifen umfassen, als auch hydraulische Sensoren. Bei diesen bekannten Anordnungen ist stets der Kontakt zwischen dem Preßmedium und dem Sensor erforderlich, was den Nachteil hat, daß der Sensor bei Massen, die zum Wandgleiten neigen, unmittelbar der Reibung und damit dem Verschleiß ausgesetzt ist. Mit Hilfe entsprechender Aussparungen, in die die Sensoren eingesetzt werden, kann man der Abrasur zwar entgegenwirken, es muß dabei jedoch in Kauf genommen werden, daß der Strömungsdruck nicht mehr exakt erfaßt wird.

Bei starken konischen Düsen oder Blenden bilden sich bei vielen Medien Strömungstoträume, die bis in den Bereich der Sensoren reichen, so daß ein geringerer Fließdruck erfaßt wird als tatsächlich in der Preßkammer herrscht. Preßmassen, die stark zum Wandhaften neigen, können radiale Druckprofile ausbilden, so daß der gemessene Radialdruckwert nicht dem tatsächlichen Fließdruck entspricht.

Der Erfindung liegt die Aufgabe zugrunde, ein Spritz- oder Preßwerkzeug mit einer Druckmeßeinrichtung der im Oberbegriff des Anspruches 1 angegebenen Gattung zu schaffen, bei dem stets eine exakte Erfassung des tatsächlichen Preßdrucks möglich ist und die Sensoreinrichtung keinem Verschleiß durch die strömende Preßmasse ausgesetzt ist.

Diese Aufgabe wird bei einem Spritz- oder Preßwerkzeug der vorstehend genannten Gattung durch die kennzeichnenden Merkmale des Anspruches 1 gelöst.

Die Vorteile der erfindungsgemäßen Lösung liegen insbesondere darin, daß die Druckmeßeinrichtung außerhalb des Hohlraums angeordnet ist und somit nicht mehr mit der Preßmasse in Berührung kommt. Über die vorgeschlagene Druckmeßeinrichtung wird der Druck exakt erfaßt. Der gemessene Wert entspricht dabei der Axialkraft, welche von allen Strömungswiderständen nach der Druckerzeugung verursacht wird, d.h. es werden die Schubspannungen aller Reiboberflächen oder Stauflächen aufsummiert. Dabei ist es egal, ob die Schubspannungen von der reibenden Masse direkt auf den Preßkopf übertragen werden, oder ob sich eine ruhende, haftende Gleitschicht als Kraftübertragungsmittel ausbildet. Die Druckanzeige bleibt konstant, weil die Kräfte über den gesamten Umfang aufsummiert werden und nicht wie beim Radialdruckmeßgerät nur an einer Stelle, die durch Drehen der Schnecke einer ständigen Pulsation ausgesetzt ist.

Gemäß einer Weiterbildung des Erfindungsgegenstandes umfaßt die federnde Spanneinrichtung mindestens einen, vorzugsweise jedoch mehrere Zuganker, die einerseits an einem Bund des Flanschzylinders und andererseits an einem Bund des Preßkopfes befestigt und derart gestaltet sind, daß sie eine definierte Längenänderung ermöglichen. Damit der Meßwert gleich als elektrische Größe vorliegt und nicht erst weitere Signalumformer notwendig werden, sind als Einrichtung zur Erfassung des Preßdrucks Dehnmeßstreifen in Vollbrückenschaltung unmittelbar im Zuganker befestigt, wobei deren Längenänderung erfaßt wird.

Damit die Preßmasse nicht in einen zur Abkopplung zwischen Preßkopf und Flanschzylinder notwendigen Arbeitsspalt gelangt, weist der Hohlraum an der Schnittstelle zwischen dem Flanschzylinder und dem Preßkopf ein Dichtungselement auf, das bezüglich seines inneren Radius der Wandung des Hohlraums angepaßt ist. Durch diese Gestaltung des Dichtungselementes wird eine Querschnittsänderung im Hinblick auf die durchströmende Preßmasse vermieden. Vorzugsweise besitzt das Dichtungselement die Form eines Ringes, der teilweise in einer radialen Ausnehmung im Preßkopf und teilweise in einer radialen Ausnehmung im Flanschzylinder angeordnet ist.

Zweckmäßigerweise enthält die Auswerteschaltung einen frei programmierbaren Signalverstärker, mit dessen Hilfe die gemessene Axialkraft bezogen auf die Querschnittsfläche der Druckerzeugung normiert wird.

Das erfindungsgemäße Werkzeug mit Druckmeßeinrichtung wird nachfolgend anhand der Zeichnung näher erläutert. In der Zeichnung zeigt:
- Fig. 1: die Längsansicht einer Schneckenpresse, teilweise im Schnitt,
- Fig. 2: eine Ansicht gemäß Linie II-II in Fig. 1.
- Fig. 3: einen Schnitt durch ein Dichtungselement.

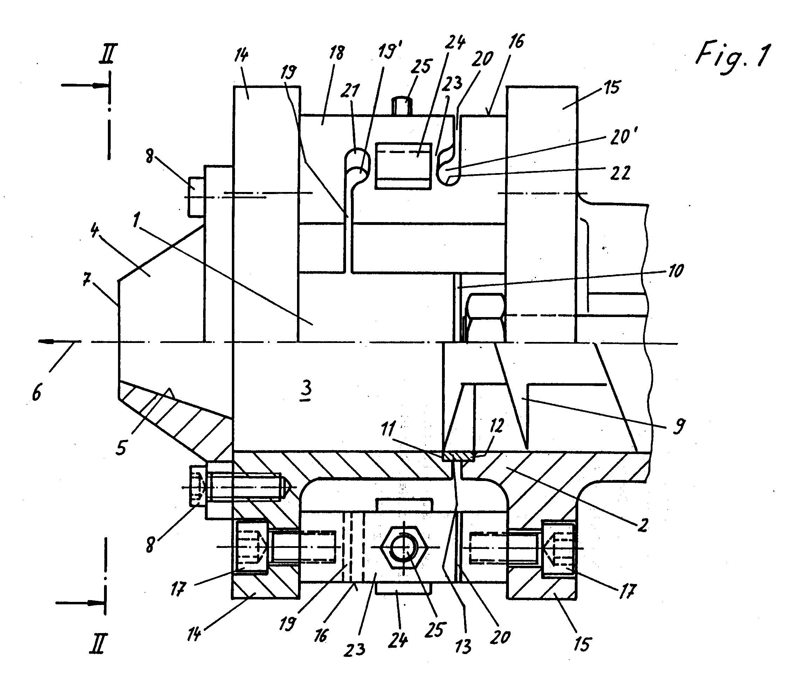

In Fig. 1 ist ein aus einem Preßkopf 1 und einem Flanschzylinder 2 bestehendes Preßwerkzeug dargestellt, wobei in der unteren Hälfte ein Schnitt entlang der Mittelachse gezeigt ist. Der Preßkopf 1 und der Flanschzylinder 2 begrenzen einen Hohlraum 3, der an der dem Flanschzylinder 2 abgewandten Seite des Preßkopfes 1 durch eine Düse 4 abgedeckt ist. Die Düse 4 hat eine konische Innenkontur 5 und in Preßrichtung (Pfeil 6) gesehen eine Austrittsöffnung 7. Die Düse 4 ist mittels Schrauben 8 an dem Preßkopf 1 befestigt.

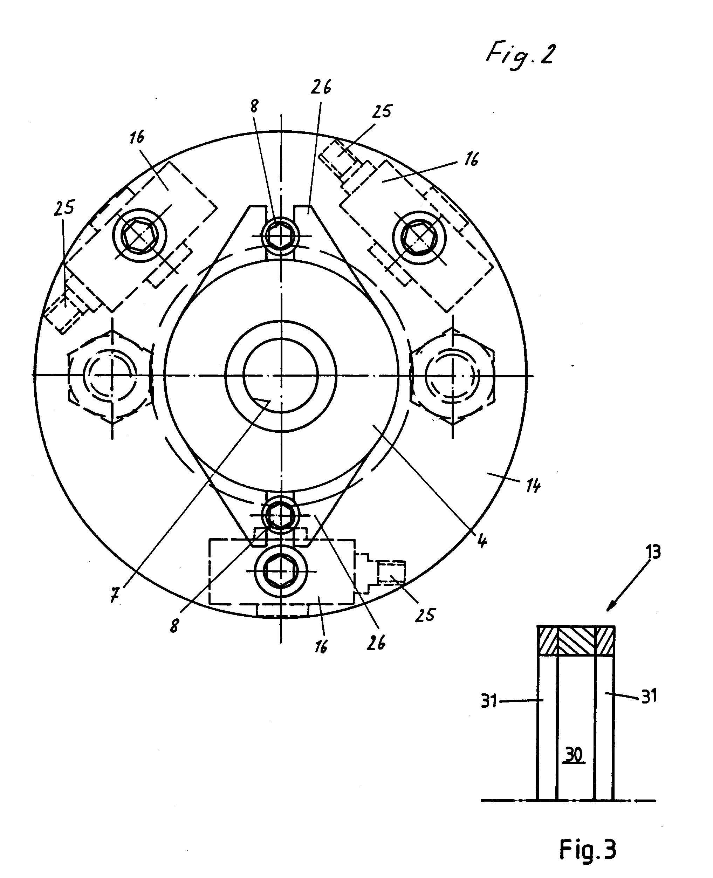

In dem Flanschzylinder 2 befindet sich eine Schnecke 9 zur Druckerzeugung, deren äußerer Durchmesser annähernd dem Innendurchmesser des Hohlraumes entspricht. Zwischen dem Flanschzylinder 2 und dem Preßkopf 1 ist ein axialer Abstand 10 vorhanden, durch den der Preßkopf 1 von dem Flanschzylinder 2 entkoppelt ist. An den sich gegenüberliegenden Flächen weisen der Preßkopf und der Flanschzylinder 2 an der Wandung des Hohlraumes 3 radiale Ausnehmungen 11 und 12 auf, in denen ein ringförmiges Dichtungselement 13, das den gleichen Innendurchmesser besitzt wie der Hohlraum 3, angeordnet ist. Durch das Dichtungselement 13 wird das Austreten der zu verarbeitenden Masse auch bei axialer Bewegung zwischen Preßkopf 1 und Flanschzylinder 2 im Bereich des axialen Abstands 10 verhindert. Es besteht, wie Fig. 3 zeigt, aus einem mittleren Stahlring 30 rechteckförmigen Querschnitts, auf dessen axialen Stirnseiten Flachdichtringe 31 z.B. aus Gummi angeordnet sind.

Der Preßkopf 1 weist einen radialen Bund 14 und der Flanschzylinder 2 einen radialen Bund 15 auf. Zwischen den radialen Bünden 14 und 15 sind mehrere Zuganker 16 angeordnet, die mittels Schrauben 17 an den Bünden 14 und 15 lösbar befestigt sind. Die Zuganker 16 bestehen aus einem vorzugsweise quaderförmigen Grundkörper 18 mit zwei Einschnitten 19 und 20. Die Einschnitte 19 und 20 liegen auf gegenüberliegenden Seiten, verlaufen quer zur Kraftbeaufschlagungsrichtung, sind zueinander entgegengesetzt gerichtet und liegen in Längsrichtung des Zugankers in axialem Abstand zueinander. Die Einschnitte 19 und 20 sind an ihrem inneren Ende 21 und 22 als erweiterte Abschnitte 19' und 20' ausgebildet, die eine bogenförmige Gestalt haben. Hierdurch werden insbesondere Kerbspannungen am Ende der Einschnitte 19 und 20 vermieden, die sonst die Gefahr von Rissen mit sich bringen können. Durch die Gestaltung der Einschnitte 19 und 20 im Grundkörper 18 erhält der Zuganker 16 die Charakteristik einer Feder mit nur begrenzter Längenänderung, die sich dadurch auszeichnet, daß sehr große Zug- oder Druckkräfte übertragen werden können. In einem Bereich 23 zwischen den Einschnitten 19 und 20 des Grundkörpers 18 sind vorzugsweise mehrere Dehmeßstreifen 24 in Vollbrückenschaltung befestigt, die über elektrische Anschlüsse 25 mit einer - in der Zeichnung nicht dargestellten - Auswerteschaltung verbunden sind.

Die Anzahl und Anordnung der als Kraftmeßzellen ausgebildeten Zuganker 16 ist so gewählt, daß das System nicht statisch überbestimmt ist. So sind im Ausführungsbeispiel drei Zuganker bzw. Kraftmeßzellen vorgesehen.

Bei Betrieb der Schneckenpresse wird die zu verarbeitende Masse in dem Hohlraum 3 mittels der Schnecke 9 gefördert und unter Druck gesetzt. Die unter Druck stehende Masse wird durch die Austrittsöffnung 7 in der Düse 4 in Richtung des Pfeiles 6 ausgestoßen. Aufgrund des hohen Druckes in dem Hohlraum 3 wird die auf die Düse 4 wirkende Druckkraft über den radialen Bund 14 des Preßkopfes 1 auf die Zuganker 16 übertragen. Da der Flanschzylinder 2 ortsfest gehalten ist, bewirkt die an der Düse anstehende Druckkraft eine Zugbeanspruchung der Zuganker 16, was eine begrenzte Längenänderung der Zuganker 16 zur Folge hat. Diese Längenänderung verändert das Signal der Dehnmeßstreifen 24, welches in einer Auswerteschaltung erfaßt und beispielsweise für eine Anzeigevorrichtung weiterverarbeitet wird. Entsprechend der Dehnung der Zuganker 16 wird auch der axiale Abstand 10 zwischen Preßkopf 1 und Flanschzylinder 2 verändert, wobei jedoch das Dichtungselement 13 ein Austreten der Masse im Bereich des axialen Abstands 10 verhindert. Die relative Axialverschiebung zwischen Preßkopf 1 und Flanschzylinder 2 kann bei Vollast 60 µm betragen. Schon bei dieser geringen Verschiebung kann bei starrer Dichtung Material in den Spalt eindringen, was eine Nullpunktabweichung zur Folge hätte. Das Dichtungselement ist daher wie in Fig. 3 gezeigt aufgebaut.

Fig. 2 zeigt die Ansicht nach der Linie II-II in Fig. 1, d.h. eine Ansicht auf die Düse 4 und den radialen Bund 14 des Preßkopfes 1. Aus dieser Darstellung ist ersichtlich, daß die Düse 4 zwei sich radial erstreckende Laschen 26 besitzt, die zum Befestigen der Düse 4 an dem Bund 14 des Preßkopfs 1 mittels der Schrauben 8 dienen. Es ist weiterhin ersichtlich, daß über den Kreisumfang verteilt drei Zuganker 16 vorgesehen sind.

Wie Fig. 2 zeigt, sind die Zuganker 16 über den Umfang mit unterschiedlichen Abständen angeordnet. Der untere Zuganker liegt aus Platzgründen mit einem jeweiligen Abstand von ca. 135° zu den benachbarten oberen Zugankern, die einen Abstandswinkel von 90° zueinander haben.

## Patentansprüche

1. Spritz- oder Preßwerkzeug mit einer Druckmeßeinrichtung für Schnecken- oder Kolbenpressen, bei denen das Werkzeug einen Flanschzylinder (2) und einen Preßkopf (1) aufweist, die einen Hohlraum (3) begrenzen, mit einer die zu verarbeitende Masse fördernde und mit Druck beaufschlagende Druckerzeugungseinrichtung (9) und mit einer Einrichtung zur Erfassung des in dem Hohlraum (3) herrschenden Preßdruckes,
dadurch gekennzeichnet, daß der Flanschzylinder (2) und der Preßkopf (1) in axialer Richtung zueinander begrenzt verschieblich angeordnet sind und mittels mindestens einer federnden Spanneinrichtung mechanisch derart gekoppelt sind, daß die Spanneinrichtung den Preßkopf (1) gegen den Flanschzylinder (2) preßt, und daß die Einrichtung zur Erfassung des Preßdruckes außerhalb des Hohlraumes (3) angeordnet ist und die relative Axialverschiebung zwischen Preßkopf (1) und Flanschzylinder (2) erfaßt.

2. Werkzeug nach Anspruch 1,
dadurch gekennzeichnet, daß die federnde Spanneinrichtung Zuganker (16) umfaßt, die einerseits an einem Bund (15) des Flanschzylinders (2) und andererseits an einem Bund (14) des Preßkopfes (1) befestigt und derart gestaltet sind, daß sie eine definierte Längenänderung ermöglichen.

3. Werkzeug nach Anspruch 2,
dadurch gekennzeichnet, daß als Einrichtung zur Erfassung des Preßdruckes Dehnmeßstreifen (24) im Zuganker (16) befestigt sind und dessen Längenänderung erfassen.

4. Werkzeug nach Anspruch 3,
dadurch gekennzeichnet, daß zwischen Preßkopf (1) und Flanschzylinder (2) über den Kreisumfang verteilt drei Zuganker (16) mit Dehnmeßstreifen (24) vorgesehen sind, wobei alle Dehnmeßstreifen (24) an eine gemeinsame Auswerteschaltung angeschlossen sind.

5. Werkzeug nach einem der Ansprüche 2 bis 4,
dadurch gekennzeichnet, daß jeder Zuganker (16) aus einem Grundkörper (18) besteht, der mindestens zwei im wesentlichen quer zur Kraftbeaufschlagungsrichtung verlaufende Einschnitte (19, 20) besitzt, die in einander gegenüberliegenden Seiten und versetzt mit axialem Abstand zueinander angeordnet sind, und daß der Dehnmeßstreifen (24) am Grundkörper (18) in einem Bereich (23) zwischen den Einschnitten (19, 20) angeordnet ist.

6. Werkzeug nach Anspruch 5,
dadurch gekennzeichnet, daß die Einschnitte (19, 20) erweiterte Abschnitte (19', 20') aufweisen und an ihrem innen liegenden Ende (21, 22) gerundet sind.

7. Werkzeug nach einem der Ansprüche 1 bis 6,
dadurch gekennzeichnet, daß der Hohlraum (3) an der Schnittstelle (axialer Abstand 10) zwischen dem Flanschzylinder (2) und dem Preßkopf (1) ein Dichtungselement (13) aufweist, das bezüglich seines inneren Radius der Wandung des Hohlraums (3) angepaßt ist.

8. Werkzeug nach Anspruch 7,
dadurch gekennzeichnet, daß das Dichtungselement (13) die Form eines Ringes besitzt und teilweise in einer radialen Ausnehmung (11) im Preßkopf (1) und teilweise in einer radialen Ausnehmung (12) im Flanschzylinder (2) angeordnet ist.

9. Werkzeug nach Anspruch 7 oder 8,
dadurch gekennzeichnet, daß das Dichtungselement (13) aus einem Stahlring (30) mit auf seinen Stirnseiten angeordneten Flachdichtringen (31) besteht (Fig. 3.)

10. Werkzeug nach einem der Ansprüche 4 bis 9,
dadurch gekennzeichnet, daß die Auswerteschaltung einen frei programmierbaren Signalverstärker enthält.

## Claims

1. Injection or pressing die with a pressure-measuring device for a screw extrusion press or ram-type press, in which the die comprises a flanged cylinder (2) and a press head (1), which define a cavity (3), with a pressure-generating device (9) conveying the material to be processed and applying pressure thereto and with a device for monitoring the pressing effect prevailing in the cavity (3), characterised in that the flanged cylinder (2) and the press head (1) are arranged to slide in the axial direction towards each other in a limited manner and are connected mechanically by means of at least one resilient tensioning device so that the tensioning device presses the press head (1) against the flanged cylinder (2) and that the device for monitoring the pressing effect is located outside the cavity (3) and ascertains the relative axial displacement between the press head (1) and flanged cylinder (2).

2. Die according to Claim 1, characterised in that the resilient tensioning device comprises tension rods (16), which are attached at one side to a collar (15) of the flanged cylinder (2) and at the other side to a collar (14) of the press head (1) and are designed so that they facilitate a defined elongation.

3. Die according to Claim 2, characterised in that as the device for monitoring the pressing effect, resistance strain gauges (24) are attached in the tension rod (16) and monitor its elongation.

4. Die according to Claim 3, characterised in that provided between the press head (1) and flanged cylinder (2), distributed over the periphery are three tension rods (16) with resistance strain gauges (24), all the resistance strain gauges (24) being connected to a common evaluation circuit.

5. Die according to one of Claims 2 to 4, characterised in that each tension rod (16) consists of a basic member (18), which comprises at least two notches (19, 20) extending substantially transversely to the direction in which the force is applied, which notches are arranged in opposite sides and are offset by an axial distance with respect to each other and that the resistance strain gauge (24) is located on the basic member (18) in a region (23) between the notches (19, 20).

6. Die according to Claim 5, characterised in that the notches (19, 20) comprise enlarged sections (19', 20') and are rounded at their inner end (21, 22).

7. Die according to one of Claims 1 to 6, characterised in that at the intersection (axial spacing 10) between the flanged cylinder (2) and the press head (1), the cavity (3) comprises a sealing member (13), which as regards its inner radius is adapted to the wall of the cavity (3).

8. Die according to Claim 7, characterised in that the sealing member (13) is in the shape of a ring and is located partly in a radial recess (11) in the press head (1) and partly in a radial recess (12) in the flanged cylinder (2).

9. Die according to Claim 7 or 8, characterised in that the sealing member (13) consists of a steel ring (30) with flat sealing rings (31) located on its end faces (Figure 3).

10. Die according to one of Claims 4 to 9, characterised in that the evaluation circuit contains a freely programmable signal amplifier.

## Revendications

1. Moule à injection ou moule à compression avec un dispositif pour mesurer la pression, pour extrudeuses ou presses à piston, dans lequel le moule comporte un cylindre à bride (2) et un chapeau de presse (1) qui délimitent une cavité (3), comprenant un dispositif générateur de pression (9) qui transporte la masse à traiter et la met sous pression, et un dispositif pour la détection de la pression régnant à l'intérieur de la cavité (3), **caractérisé en ce** que le cylindre à bride (2) et le chapeau de presse (1) sont montés de façon à pouvoir se déplacer de manière limitée l'un par rapport à l'autre dans le sens axial et couplés mécaniquement au moyen d'au moins un dispositif de serrage élastique de telle façon que le dispositif de serrage presse le chapeau de presse (1) contre le cylindre à bride (2), et que le dispositif pour la détection de la pression est prévu à l'extérieur de la cavité (3) et capte le déplacement axial relatif entre le chapeau de presse (1) et le cylindre à bride (2).

2. Moule selon la revendication 1, caractérisé en ce que le dispositif de serrage élastique comprend des tirants d'ancrage (16) qui sont fixés d'une part sur un collet (15) du cylindre à bride (2) et, d'autre part, sur un collet (14) du chapeau de presse (1) et conformés de façon à permettre une variation de longueur définie.

3. Moule selon la revendication 2, caractérisé en ce que le dispositif pour la détection de la pression est constitué par des jauges extensométriques (24) fixées dans le tirant d'ancrage (16) dont elles captent la variation de longueur.

4. Moule selon la revendication 3, caractérisé en ce qu'il comprend, entre le chapeau de presse (1) et le cylindre à bride (2), trois tirants d'ancrage 16) avec des jauges extensométriques (24) répartis sur la circonférence, toutes les jauges extensométrique (24) étant reliées à un circuit d'interprétation commun.

5. Moule selon l'une des revendications 2 à 4, caractérisé en ce que chaque tirant d'ancrage (16) est constitué par un corps de base (18) qui présente au moins deux entailles (19, 20) orientées sensiblement transversalement par rapport à la direction d'application des forces et réalisées avec un décalage et à distance axiale l'une par rapport à l'autre dans des faces diamétralement opposées, et que la jauge extensométrique (24) est fixée sur le corps de base (18), dans la région (23) entre les entailles (19, 20).

6. Moule selon la revendication 5, caractérisé en ce que les entailles (19, 20) présentent des sections élargies (19', 20') et qu'elles sont arrondies à leur extrémité (21, 22) située à l'intérieur.

7. Moule selon l'une des revendications 1 à 6, caractérisé en ce que la cavité (3) présente à l'intersection (distance axiale 10) entre le cylindre à bride (2) et le chapeau de presse (1), un élément d'étanchéité (13) dont le rayon intérieur est adapté à la paroi de la cavité (3).

8. Moule selon la revendication 7, caractérisé en ce que l'élément d'étanchéité (13) présente la forme d'un anneau et est disposé en partie dans un évidement radial (11) dans le chapeau de presse (1) et en partie dans un évidement radial (12) dans le cylindre à bride (2).

9. Moule selon l'une des revendications 7 ou 8, caractérisé en ce que l'élément d'étanchéité (13) est constitué par un anneau d'acier (30) dont les surfaces frontales portent des bagues d'étanchéité plates (31) (fig. 3).

10. Moule selon l'une des revendications 4 à 9, caractérisé en ce que le circuit d'interprétation comprend un amplificateur de signaux librement programmable.
